Europäisches Patentamt

European Patent Office

Office européen des brevets

(11) Numéro de publication: **0 092 495**
**A1**

## DEMANDE DE BREVET EUROPEEN

(21) Numéro de dépôt: 83450011.8

(22) Date de dépôt: 21.04.83

(51) Int. Cl.³: **F 16 K 11/087,** F 16 K 27/06

(30) Priorité: 21.04.82 FR 8206978

(71) Demandeur: **MATERIEL ACCESSOIRES VINICOLE INDUSTRIE LAITIERE en abrégé M.A.V.I.L. Société à Responsabilité limitée dite:, 64, rue de la Faiencerie, F-33300 Bordeaux (FR)**

(43) Date de publication de la demande: 26.10.83
Bulletin 83/43

(72) Inventeur: **Bougard, Jean-Pierre, 19, rue des Genêts Le Haillan, F-33160 Saint Medard en Jalles (FR)**

(84) Etats contractants désignés: **CH DE IT LI**

(74) Mandataire: **Thebault, Jean-Louis, 3, rue du Professeur Demons, F-33000 Bordeaux (FR)**

(54) **Perfectionnements aux vannes à vendanges.**

(57) L'invention concerne des perfectionnements à une vanne à vendange du type trois voies à palette montée rotative dans une chambre cylindrique (1) ménagée dans le corps de vanne et dont l'axe (2) est orthogonal au plan défini par les axes concourants (3, 4) des trois voies, ladite vanne étant caractérisée en ce que ladite chambre (1) est disposée de manière à être sensiblement tangente à la génératrice (10) du conduit en ligne opposée à la voie de dérivation (9), l'axe (2) de la chambre (1) étant déporté vers cette voie de dérivation, en ce que les débouchés des trois voies dans la chambre (1) sont distribués régulièrement autour de la chambre et s'étendent sensiblement sur le même secteur angulaire et en ce que la palette (12) s'étend sur un secteur angulaire de la chambre de l'ordre de 120° environ, la face interne (14) de la palette étant sensiblement sphérique suivant un rayon de courbure du même ordre que le rayon de la chambre cylindrique (1).

Application notamment à la vendange.

- 1 -

# PERFECTIONNEMENTS AUX VANNES À VENDANGES

La présente invention se rapporte aux vannes à vendange.

La vanne à vendange sert à amener et à guider la vendange, égrappée ou non, dans telle ou telle cuve de fermentation appartenant à un ensemble situé dans un chai.

Pour effectuer cette opération, on utilise habituellement des vannes à trois voies à palette.

Ces vannes présentent un certain nombre d'inconvénients liés à la conformation du mécanisme d'obturation et aux conditions d'utilisation.

Le produit qui circule dans ces vannes, en particulier lorsqu'il s'agit de vendange mécanique (non égrappée), est très inhomogène car on y trouve, outre les grains de raisin, la râpe et des morceaux de bois, de feuilles, voire des corps étrangers.

Lorsque ce produit doit être dévié à 90° dans un coude d'une de ces vannes, il se produit très fréquemment des encrassements de l'intérieur du corps de vanne.

En effet, la structure de la palette de ces vannes est telle qu'il existe des cavités qui freinent l'écoulement de la vendange et retiennent une partie de celle-ci. Un tel encrassement peut conduire à l'obturation complète du circuit et, en tout cas, provoque la stagnation de matières susceptibles de corroder fortement et rapidement la vanne du fait de l'acidité du jus de raisin.

Il faut donc nettoyer régulièrement la vanne et souvent en la démontant complètement à cause des encrassements tenaces.

De plus, du fait de la forme de la palette et de la faible surface de frottement à la périphérie de celle-ci, l'étanchéité n'est pas bonne.

L'invention a pour but de supprimer ces divers inconvénients en proposant une nouvelle vanne à trois voies à palette perfectionnée capable d'assurer à la fois un écoulement de la vendange en ligne et à angle droit absolument lisse, sans freinage ni retenue de matières et avec une excellente étanchéité.

A cet effet, l'invention a pour objet une vanne à vendanger du type trois voies à palette montée rotative dans une chambre cylindrique ménagée dans le corps de vanne et dont l'axe est orthogonal au plan défini par les axes concourant des trois voies, ladite vanne étant caractérisée en ce que ladite chambre est disposée de manière à être sensiblement tangente à la génératrice du conduit en ligne opposée à la voie de dérivation, l'axe de la chambre étant déporté vers cette voie de dérivation, en ce que les débouchés des trois voies dans la chambre sont distribués régulièrement autour de la chambre et s'étendent sensiblement sur le même secteur angulaire et en ce que la palette s'étend sur un secteur angulaire de la chambre de l'ordre de 120° environ, la face interne de la palette étant sensiblement sphérique suivant un rayon de courbure du même ordre que le rayon de la chambre cylindrique.

Une telle structure de vanne évite dans l'une quelconque des trois positions de la palette la formation des cavités dans le trajet de la vendange à l'intérieur de la vanne du fait de la disposition géométrique des débouchés des trois voies dans la chambre cylindrique, de la conformation de la palette et de sa courbure interne étudiée pour se raccorder au mieux avec les parois des conduits débouchant dans ladite chambre cylindrique.

Par suite, le freinage de la vendange est très sensiblement réduit et, surtout, tout colmatage ou encrassement est évité.

D'autres caractéristiques et avantages ressortiront de la description qui va suivre d'un mode de réalisation de la vanne selon l'invention, description donnée à titre d'exemple uniquement et en regard des dessins annexés sur lequels :

- Fig. 1 représente le schéma d'une vanne à trois voies à palette utilisée actuellement pour la vendange ;

- Fig. 2 représente le schéma d'une vanne conforme à l'invention dans la même position que la vanne de la Fig. 1 ;
- Fig. 3 illustre la vanne de la Fig. 2 dans la position de passage en ligne ;
- Fig. 4 représente une vue en perspective d'un mode de réalisation de la vanne selon l'invention ;
- Fig. 5 représente une vue en élévation frontale du corps de la vanne de la Fig. 4 ;
- Fig. 6 représente une vue de dessus du corps de la vanne de la Fig. 4 ;
- Fig. 7 représente une vue en coupe partielle verticale du corps de la vanne et de sa palette ;
- Fig. 8 représente une vue en perspective de la palette de la Fig. 7, et
- Fig. 9 représente une vue de dessus de la palette de la Fig. 8.

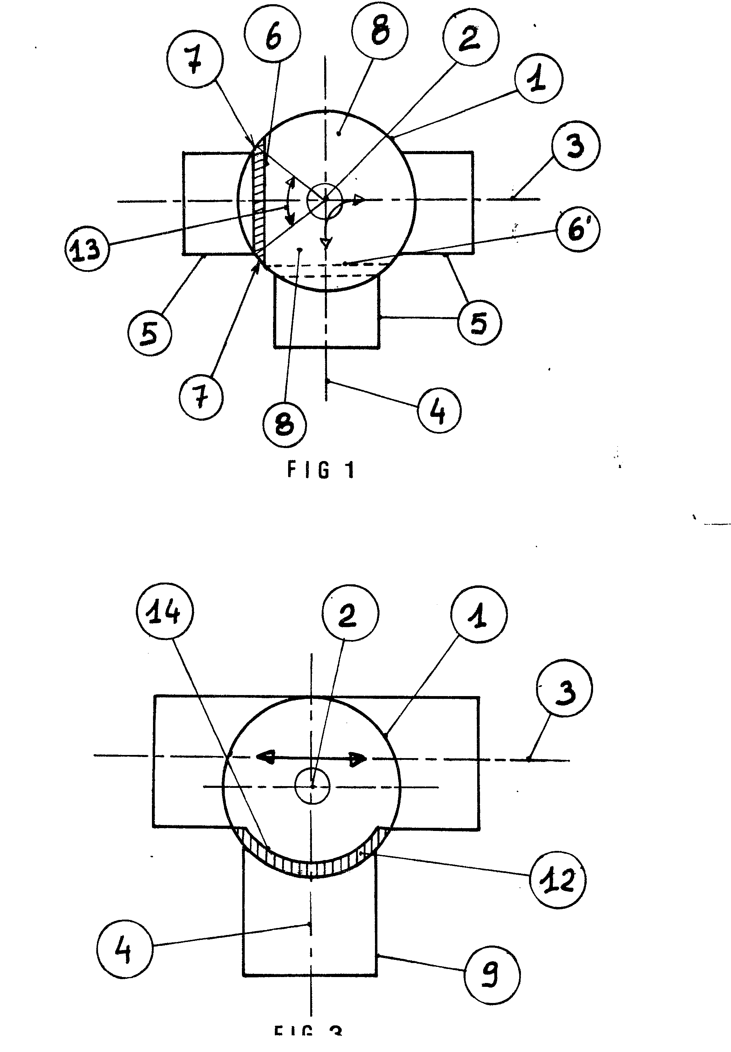

La Fig. 1 illustre le schéma de principe d'une vanne trois voies à palette telle que celles utilisées actuellement pour la vendange.

Cette v a n n e comprend une chambre cylindrique 1 ménagée dans un corps de vanne et dont l'axe 2 est perpendiculaire au plan défini par l'axe 3 du passage en ligne et l'axe 4 de la voie de dérivation, l'axe 2 de la chambre étant à l'intersection des axes 3 et 4.

Le diamètre des trois voies 5 est identique et très sensiblement inférieur au diamètre de la chambre 1.

La palette de la vanne est schématisée en 6 et est constituée d'une plaque rectangulaire plane parallèle à l'axe 2 et montée rotative autour de cet axe de façon à obturer au choix l'une des trois voies 5.

La palette 6 est en contact avec la paroi de la chambre 1 par ses deux tranches latérales parallèles 7 lesquelles sont incurvées pour épouser la paroi cylindrique.

Dans la position de la palette 6 représentée sur la Fig. 1, la vendange subit dans la vanne une dérivation à 90° suivant la double flèche. On se rend compte immédiatement de l'importance des cavités 8 existant à l'intérieur de la chambre 1 et propice à une retenue d'une partie de la vendange avec les conséquences que l'on a mentionnées plus haut.

On rencontre ces mêmes phénomènes, bien que dans une moindre mesure, lorsque la palette est en position 6' de passage en ligne.

Il est à signaler également la faible surface de frottement à la périphérie de la palette 6, procurant ainsi une étanchéité insuffisante.

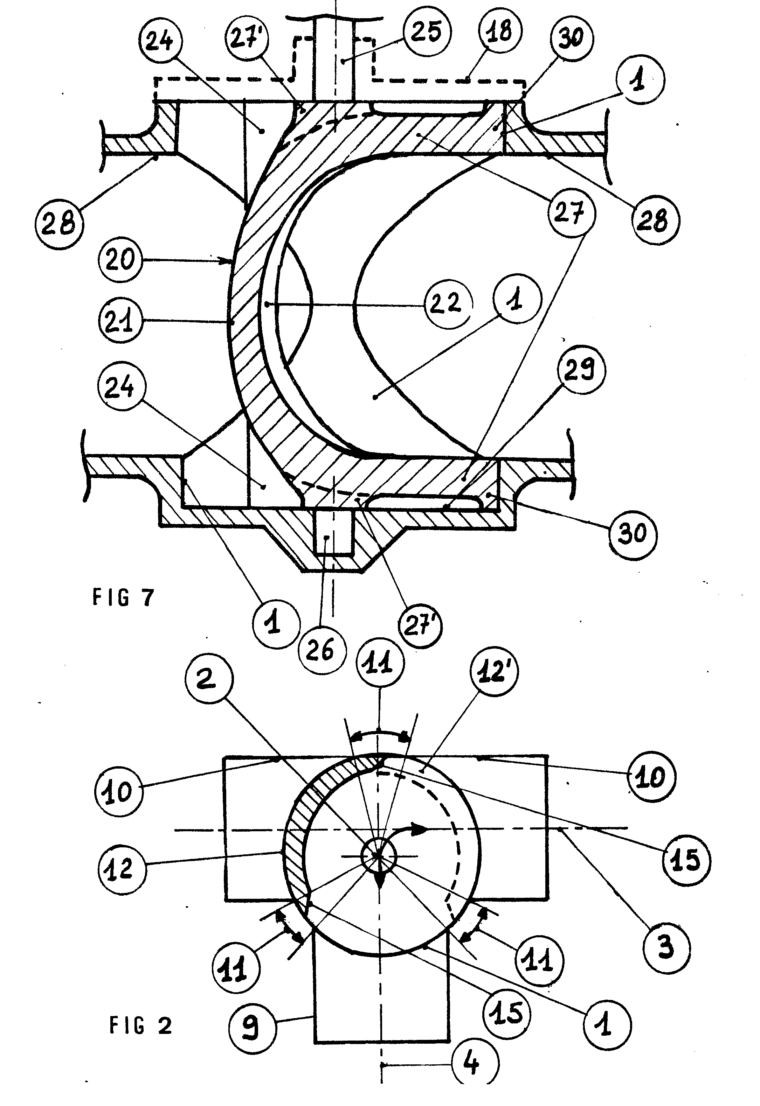

La Fig. 2 illustre la solution apportée par le Demandeur.

Conformément à l'invention la chambre cylindrique 1, bien qu'ayant toujours son axe 2 perpendiculaire au plan défini par l'axe 3 du passage en ligne et l'axe 4 de la voie de dérivation, est déportée vers la voie de dérivation 9 et est sensiblement tangente à la génératrice 10 du passage en ligne située à l'opposé de la voie de dérivation 9.

Le diamètre de la chambre 1 est sensiblement supérieur au diamètre identique des trois voies de sortie de la vanne.

Le débouché dans la chambre 1 (dans le plan des axes 3 et 4) des trois conduits de passage de la vanne s'étendent sur un secteur angulaire à peu près identique et sont répartis régulièrement à la périphérie de la chambre 1.

En d'autre termes, lesdits débouchés sont séparés entre eux par un secteur angulaire 11 à peu près identique et à 120° environ les uns des autres.

Quant à la palette 12, elle couvre un secteur angulaire de l'ordre de 120° approximativement, cet angle pouvant varier sensiblement de part et d'autre de cette valeur.

Il est à noter que cet angle est très largement supérieur à l'angle correspondant (13, Fig. 1) de la palette des vannes classiques.

De plus, la face interne 14 de la palette 12 est incurvée suivant une forme sensiblement sphérique dont le rayon de courbure correspond approximativement au rayon de la chambre 1. Les flancs latéraux 15 de la palette 12 sont biseautés afin d'assurer conjointement avec la face concave 14 une paroi la plus lisse possible, avec le moins de creux ou aspérités possible.

Dans la position de la palette 12 représentée sur la Fig. 2 et correspondant à la même position que la palette 6 des vannes connues (Fig. 1) on remarque immédiatement que

- 5 -

0092495

l'écoulement de la vendange suivant la double flèche peut se faire avec un freinage très nettement réduit et sans risque de retenue de matière puisqu'il n'existe pratiquement plus de cavités ou de recoins susceptibles de s'encrasser. La face concave 14 en particulier est chargée d'assurer la continuité de la paroi comme s'il s'agissait d'un coude fixe conformé en arrondi.

En outre, l'étanchéité est bien meilleure du fait des surfaces de contact entre palette 12 et chambre 1 notablement plus importantes.

Sur la Fig. 2, on a représenté en tiretés en 12' la position de la palette symétrique par rapport à l'axe 4.

Dans cette position, de même que dans la troisième position (passage en ligne) de la Fig. 3, on observe la même facilité d'écoulement de la vendange dans la vanne.

Les Figures 2 et 3 n'illustrent que le principe de la vanne selon l'invention car, en réalité, la palette 12 pourra avoir (comme on le verra plus loin à propos des Fig. 7 à 9) une conformation légèrement différente tout en respectant les principes énoncés ci-dessus.

C'est ainsi qu'en pratique, la face interne 14 pourra avoir une forme moins incurvée et plus rapprochée de l'axe de la chambre 1 afin qu'en position de passage en ligne (Fig. 3) cette face 14 soit davantage dans le prolongement des parois des voies en ligne tout en assurant une courbure convenable dans les coudes à 90°. De même, la face externe de la palette sera avantageusement en retrait de la paroi de la chambre cylindrique pour réduite les frottements.

Sur la Fig. 4, on a représenté un mode de réalisation d'une vanne selon l'invention.

Cette vanne comporte un corps 16 en forme générale de T avec les brides de montage 17 des trois voies et le chapeau 18 de fermeture de la chambre du boisseau et une poignée 19 de commande manuelle.

Les figures 5 et 6 représentent le corps 16 de la vanne sans le boisseau, ni le chapeau, ni la poignée 19, ni les brides 17.

Ce corps correspond sensiblement au schéma de la Fig. 2, avec l'axe de passage en ligne 3, l'axe 4 de la dérivation et l'axe 2 de la chambre 1 déporté par rapport à l'axe 3.

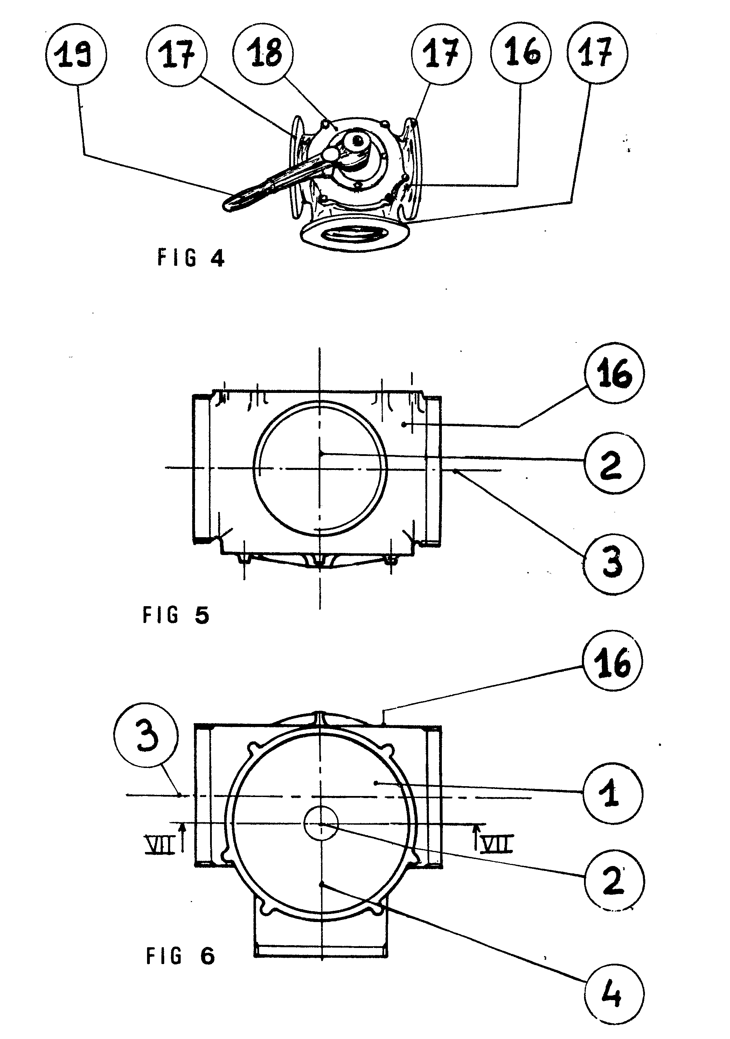

La palette de cette vanne est représentée aux Fig. 8 et 9, la Fig. 7 représentant une coupe verticale passant par l'axe VII-VII de la vanne de la Fig. 6 munie de la palette de la Fig. 8, celle-ci étant coupée dans son plan de symétrie vertical.

La palette des Fig. 7 à 9 comprend un voile incurvé 20 correspondant à la partie 12 de la Fig. 2. Ce voile 20 comporte uneface externe 21 et une face interne 22 parallèles et sensiblement sphériques (la face 22 étant analogue à la face 14).

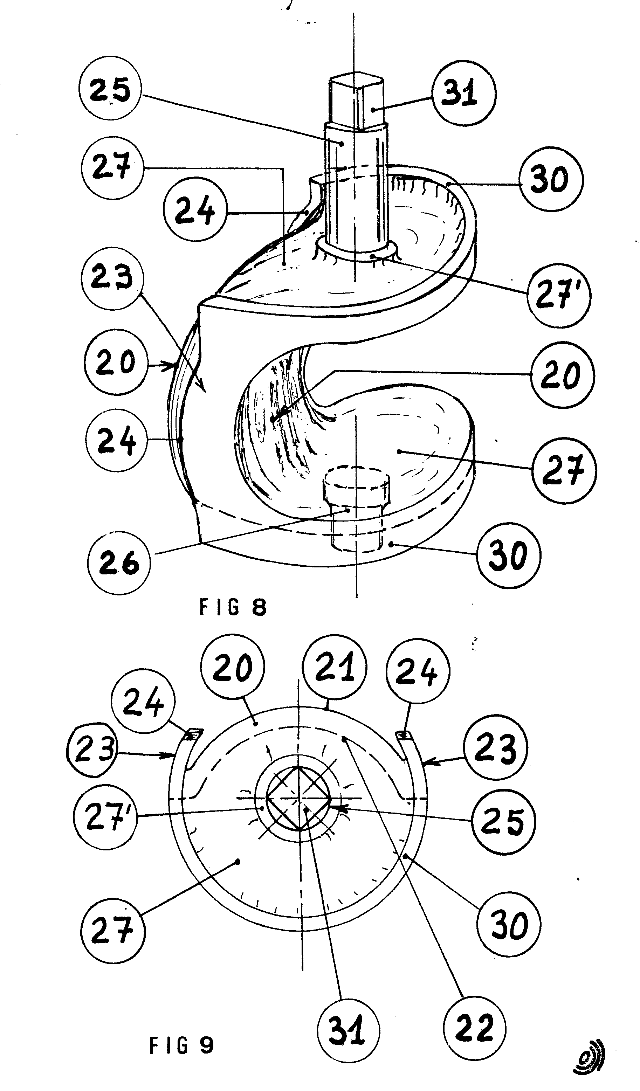

Les flancs latéraux 23 du voile ont une face cylindrique correspondant à la courbure de la chambre cylindrique 1. Comme on le voit sur les Fig. 8 et 9 ces flancs 23 ont une surface plus importante que celle correspondant à la simple épaisseur du voile 20 grâce à des retours 24, afin d'augmenter les surfaces en contact avec la chambre et donc d'améliorer l'étanchéité.

Il est à noter que la face 21 est en retrait notable par rapport à la paroi de la chambre cylindrique 1 ce qui réduit d'autant les frottements contre la paroi de la chambre cylindrique.

Le voile 20 est relié aux deux axes coaxiaux supérieur 25 et inférieur 26 de commande de la palette par l'intermédiaire des deux oreilles 27 de raccordement sensiblement parallèles et semi-circulaires et dont les faces internes assurent les raccordements entre la face interne 22 du voile et les orifices 28 des conduits de la vanne.

L'axe inférieur 26 (relié à l'oreille 27 par un bossage 27') pivote dans un puits ménagé dans le fond plat circulaire 29 de la chambre 1 cependant que l'axe supérieur 25 (également relié à l'oreille 27 par un bossage 27') tourillonne dans le chapeau 18 rapporté par des vis sur l'orifice supérieur de la chambre 1.

Les oreilles 27 se trouvent à distance du fond 29 et du chapeau 18 grâce à des nervures circulaires périphériques 30 afin de limiter les frottements.

L'axe 25 est muni en extrémité d'un carré 31 pour recevoir la poignée 19 ou un moto-réducteur à commande à distance pouvant être de faible puissance étant donné les frottements réduits.

Les pièces de la vanne sont réalisées par exemple en bronze par fonderie. Elles peuvent être réalisées en tout autre matière capable de résister aux agressions chimiques et la vanne peut s'adapter à tous types de tuyauterie.

La conformation des oreilles 27 avec leurs nervures de guidage 30 évite conjointement avec un joint d'étanchéité annulaire (non représenté) associé à l'axe supérieur 25 toute remontée ou rejet de matière au niveau de cet axe.

L'invention peut évidemment s'appliquer à la distribution d'autre matière que la vendange, qu'elle soit liquide, pâteuse ou semi-pâteuse et alimentaire ou non.

Enfin, l'invention n'est pas limitée au mode de réalisation représenté et décrit ci-dessus mais en couvre au contraire toutes les variantes notamment en ce qui concerne la forme de la palette, ses moyens de guidage et ses moyens de commandes.

0092495

R E V E N D I C A T I O N S

1. Vanne à vendange du type trois voies à palette montée rotative dans une chambre cylindrique (1) ménagée dans le corps de vanne et dont l'axe (2) est orthogonal au plan défini par les axes concourant (3,4) des trois voies et déporté vers la voie de dérivation (9), ladite chambre étant disposée de manière à être sensiblement tangente à la génératrice (10) du conduit en ligne opposée à ladite voie de dérivation, cette vanne étant caractérisée en ce que les débouchés des trois voies dans la chambre (1) sont distribués régulièrement autour de la chambre et s'étendent sensiblement sur le même secteur angulaire et en ce que la palette (12) s'étend sur un secteur angulaire de la chambre de l'ordre de 120° environ, la face interne (14) de la palette étant sensiblement sphérique suivant un rayon de courbure du même ordre que le rayon de la chambre cylindrique.

2. Vanne à vendange suivant la revendication 1, caractérisée en ce que la palette comporte un voile (20) de forme sensiblement sphérique, raccordé à ses deux extrémités à deux oreilles (27) sensiblement parallèles et semi-circulaires se raccordant elles-mêmes aux débouchés des conduits de la vanne dans la chambre cylindrique (1).

3. Vanne à vendange suivant la revendication 2, caractérisée en ce que ledit voile (20) se trouve en retrait de la paroi de la chambre cylindrique (1) et ses flancs latéraux (23) comportent des retours (24) à face externe cylindrique épousant la paroi de ladite chambre.

4. Vanne à vendange suivant la revendication 2 ou 3, caractérisée en ce que lesdites oreilles (27) se trouvent à distance des parois planes circulaires (29,18) d'extrémité de la chambre cylindrique (1), le rebord périphérique externe desdites oreilles étant muni d'une nervure circulaire (30) en contact avec lesdites parois d'extrémité.

5. Vanne à vendange suivant l'une des revendications 2 à 4, caractérisée en ce que les oreilles (27) sont munies sur leur face extérieure de bossages coaxiaux à la chambre

BAD ORIGINAL

0092495

cylindrique (1) et prolongés par les axes supérieur (25) et inférieur (26) de commande de la palette, l'axe supérieur (25) traversant un chapeau (18) circulaire, plat, rapporté sur l'orifice supérieur de la chambre (1).

1/4

FIG 1

FIG 2

0092495

FIG 7

FIG 2

FIG 4

FIG 5

FIG 6

0092495

3/4

0092495

FIG 8

FIG 9

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. ³) |
|---|---|---|---|
| A | GB-A- 651 440 (ROLLS-ROYCE) * Page 5, lignes 94-125; figures 1-3 * | 1 | F 16 K 11/087 F 16 K 27/06 |
| A | BE-A- 387 019 (HOWDEN BUELL COMBUSTION) | | |
| A | FR-A-2 276 523 (DEFONTAINE FRERES ET FILS) | | |

DOMAINES TECHNIQUES RECHERCHES (Int. Cl. ³)

F 16 K

Le présent rapport de recherche a été établi pour toutes les revendications

| Lieu de la recherche LA HAYE | Date d'achèvement de la recherche 28-07-1983 | Examinateur VAN REETH A.L.J. |
|---|---|---|